## Europäisches Patentamt
## European Patent Office
## Office européen des brevets

(19)

(11) Publication number: **0 064 363**
**A1**

(12) # EUROPEAN PATENT APPLICATION

(21) Application number: **82302052.4**

(22) Date of filing: **21.04.82**

(51) Int. Cl.³: **G 04 C 13/11**
**H 02 K 21/14, H 02 K 1/14**

(30) Priority: **05.05.81 US 260626**

(43) Date of publication of application:
**10.11.82 Bulletin 82/45**

(84) Designated Contracting States:
**DE FR GB IT**

(71) Applicant: **EATON CORPORATION**
**100 Erieview Plaza**
**Cleveland Ohio 44114(US)**

(72) Inventor: **Hayden, Arthur Harrison**
**8705 Hillcrest Ave.**
**Crystal Lake Illinois 60014(US)**

(72) Inventor: **Connolly, Joseph Richard**
**32 Ridge Lane**
**Geneva Illinois 60134(US)**

(72) Inventor: **Jones, William Haslet**
**258 So. Oakland**
**Villa Park Illinois 60181(US)**

(74) Representative: **Douglas, John Andrew**
**Eaton House Staines Road**
**Hounslow Middlesex TW4 5DX(GB)**

(54) Synchronous motor.

(57) A synchronous motor (10, 70, 120) having an annular permanent magnet rotor (16, 128, 80) with a plurality of circumferentially spaced magnetic poles. The rotor and stator coil (18, 72, 122) are disposed between a pair of spaced parallel iron stator plates (12, 14, 82, 84, 140) in side-by-side arrangement. The stator coil iron core (38, 42, 86, 88, 142, 144) and rotor air-gap stator poles (46, 50, 104, 106, 150, 152) are formed by integral portions of the stator plates. The rotor has a plastic hub (54, 92, 130) journaled in the stator plates and a plastic base (20, 108, 154) maintains the stator plates in the desired spaced parallel arrangement.

EP 0 064 363 A1

BACKGROUND OF THE INVENTION:

The present invention relates to alternating current electric motors of the synchronous type having permanent magnets disposed on the rotor. Synchronous motors of this general type have found application in small fractional horsepower constant RPM drives used for electric clocks and timing devices. In particular, small synchronous permanent magnet motors are commonly employed for timers used in domestic appliances as for example, washing machines and automatic dishwashers for controlling the sequencing and duration of the events of the duty cycle for the appliance. Typically, the small synchronous motor drives a gear train, the output of which operates a control or indicating mechanism.

Since a timing motor is usually coupled to a gear train for speed reduction and torque multiplication, the power output requirements of such timing motors are very low, e.g., of the order of one one hundredth of a horsepower and is thus of secondary importance. However, the constant speed of rotation of the synchronous type motor is of primary importance for providing an accurate time base for the operation of the mechanism.

Furthermore, in domestic appliance timer applications it is desirable to provide a synchronous timing motor of the smallest configuration possible in order to minimize the space required for the motor in juxtaposition to the gear train. In particular, in providing timer mechanisms for household washing machines and dishwashers, it is common practice to locate the timing mechanism in the console bezel adjacent the operator actuated controls. This location permits ready access

-2-

and ease of removal of the entire timer mechanism for servicing. It is therefore necessary to keep the timing mechanism as small as possible for packaging within the confines of the control console.

Heretofor, synchronous timing motors have generally been of the type having a concentric configuration wherein the rotor was located concentrically within the stator coil or coaxially therewith in axially spaced arrangement. Such generally cylindrical motor configurations have required that the motor extend from the gear train housing as a protuberence and have generally limited the compactness of the timer mechanism for the appliance.

Furthermore, where concentric or cylindrical configurations are employed for the synchronous motor, the rotor is typically quite small in diameter to minimize the overall diameter of the coil. In order to provide sufficient torque for starting and maintaining synchronous speed in such a configuration, additional turns of the coil are employed and additional copper wire is thus required for manufacturing the coil. It has, therefore, been desired to find a means of providing a compact synchronous timing motor having minimial usage of copper for the stator coil windings and yet provide a motor having sufficient torque to start and maintain synchronous speed.

In addition, it has been desired to provide a synchronous timing motor having a configuration lending itself to attachment to a gear box such that the assembly of the motor and gear box is compact and has the minimum overall dimensions. Furthermore, it has

-3-

been desired to provide a synchronous motor for a timer having the simplest construction requiring the minimum number of pieces to thereby reduce material costs and minimize the number of assembly operations performed during manufacture of the motor.

Thus, it has been desired to find alternatives to the cylindrical or concentric timing motor which would be lower in manufacturing cost yet be sufficiently reliable for use in household appliances. One such alternative motor design which has been considered is the "sandwich" construction where the stator coil and rotor are disposed in side-by-side or parallel axis arrangement.

An example of known "sandwich" timing motor construction is that shown and described in U.S. Patent 4,250,420 wherein a side-by-side coil and rotor construction is set forth for a synchronous timing motor. The aforesaid known motor construction employs a pair of parallel spaced stator plates with the coil and rotor disposed therebetween in side-by-side arrangement. However, the aforesaid known synchronous timer motor construction employs a prohibitive number of pieces to preclude manufacturing economy. In particular, the known synchronous timing motors have required numerous parts and assembly operations in order to provide a ferromagnetic core for providing a continuous magnetic flux path through the stator coil and salient poles for the air gap between the rotor poles and the stator where a side-by-side sandwich type construction was desired.

SUMMARY OF THE INVENTION:

The present invention provides a synchronous alternating

-4-

current fractional horsepower motor for use as a constant speed drive for clocks and timing mechanisms. The synchronous motor of the present invention is of the sandwich type construction having a permanent-magnet type rotor disposed in side-by-side relationship with the stator coil. The rotor and stator coil are disposed between two ferromagnetic plate portions of the stator with the coil and rotor axes generally parallel.

The motor of the present invention employs a novel construction in which a continuous ferromagnetic flux path is provided through the stator coil in the form of a core formed integrally with the plate portions of the stator. The rotor includes an annular permanent magnet having a plurality of discrete magnetic poles disposed thereabout in circumferentially spaced arrangement. The air gap between the salient stator poles and the magnetic rotor poles is formed by other integral portions of the stator plates, which portions extend closely adjacent the outer periphery of the rotor in juxtaposition to the permanent magnet poles for providing the closing of the flux path. The permanent magnet of the rotor is mounted on a plastic hub journalled for rotation directly in the plate portions of the stator. The stator plate portions are maintained in the desired spaced relationship by a plastic base including spacer means disposed between the stator plate portions and retaining means for retaining the stator on the plastic base.

The novel synchronous motor of the present invention thus provides a low cost motor construction employing a minimum number of separate pieces. The motor of the present invention provides a construction which enables

-5-

the motor to start and attain synchronous speed and yet employs a minimum amount of copper wire for the stator coil winding. The motor of the present invention employs a side-by-side rotor and coil sandwich construction which provides a convenient package of minimum physical dimensions for attachment to an associated timing mechanism.

BRIEF DESCRIPTION OF THE DRAWINGS:

FIGURE 1 is a somewhat perspective view of the assembled motor in one embodiment of the invention;

FIGURE 2 is a section view taken along section indicating lines 2-2 of Figure 1; and

FIGURE 3 is an exploded view of another embodiment of the motor of the present invention.

FIGURE 4 is an enlarged view of the left-hand portion of Figure 2 showing an alternate embodiment of the stator plate spacer means;

FIGURE 5 is a perspective view of the stator iron, coil and rotor, prior to assembly of another embodiment of the invention;

FIGURE 6 is a perspective view of the assembled motor of Figure 5 prior to assembly with the plastic base;

FIGURE 7 is a perspective view of a portion of the pattern of the stator plate of an alternate embodiment of the motor of Figure 6; and

FIGURE 8 is a perspective view of the stator plate of Figure 7, in the folded condition with the coil omitted for clarity.

## DETAILED DESCRIPTION:

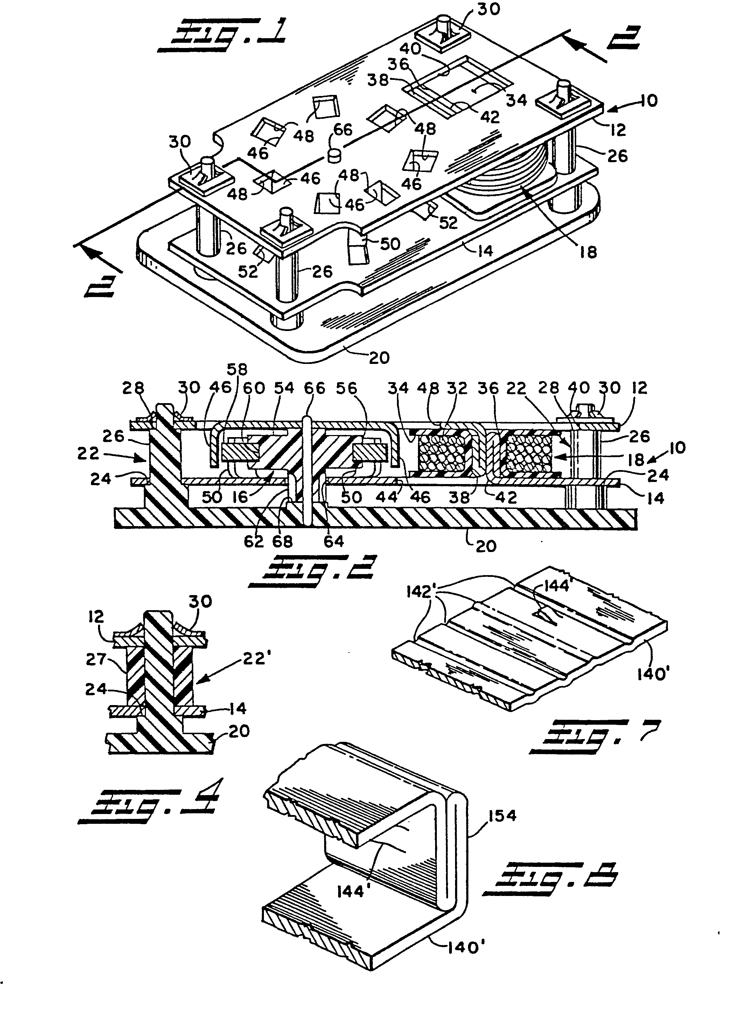

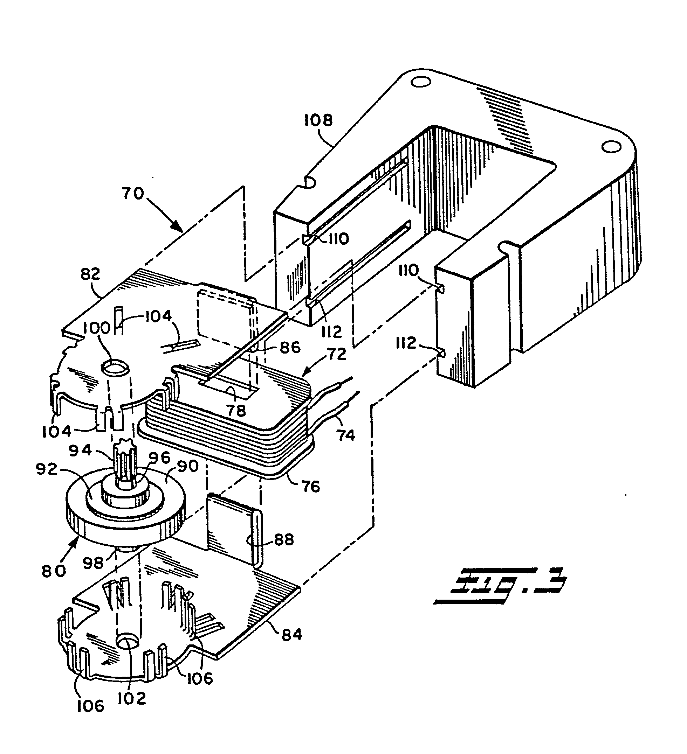

Referring now to Figures 1 and 2, the motor indicated generally at 10 has a pair of spaced stator plates 12, 14 formed of ferromagnetic material disposed in spaced parallel arrangement. The stator plates 12, 14 have disposed therebetween in spaced side-by-side relationship a rotor assembly indicated generally at 16 and an electrical stator coil assembly indicated generally at 18. The upper and lower stator plates 12, 14 are formed of ferromagnetic material or other material having a relatively high magnetic permeability.

A base 20 of nonmagnetic material is provided and includes spacer means indicated generally at 22 for maintaining the stator plates 12, 14 in the desired spaced parallel relationship. The spacer means 22 comprises a plurality of upstanding posts suitably spaced on the base 20 with each of the posts having a lower shoulder 24 with the lower stator plate being apertured and received over each of the posts and registered against the shoulder 24. Intermediate spacer portions 26 of each post have a common vertical height and terminate in an upper shoulder 28 formed thereon. Upper stator plate 12 is approximately apertured and received over the spacer means and registered against the upper shoulder 28 and is retained thereagainst by suitable retaining means, such as, retaining clips 30 received over each of the spacer means.

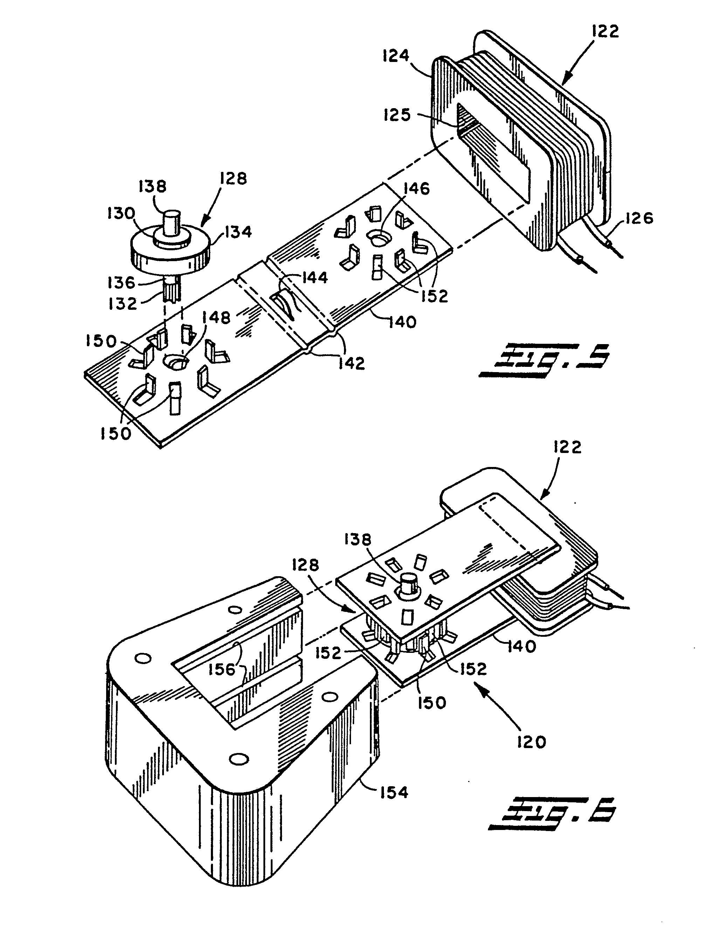

The coil assembly comprises a plurality of turns of an electrical conductor 32 wound over a bobbin 34 formed preferably of plastic material. The bobbin has oppositely disposed end flanges spaced so as to register against the inside surfaces of the stator plates 12, 14 and thus maintain the lower stator plate 14 against the shoulder 24. It will be understood, however, that in the embodiment of Figures 1 and 2, the intermediate portion 26 of the spacer means may comprise a sleeve received over the post wherein the sleeve registers against the upper surface of the stator plate 14 for maintaining the spacing of the stator plates irrespective of the length of the coil bobbin. This alternate construction is illustrated in Figure 4.

With reference to Figure 4, the alternate embodiment 22' of the spacer means eliminates the upper shoulder 28 and has the upper stator plate registered against the upper surface of a sleeve 27. In the embodiment of Figure 4, the length of the spacer 27 thus determines the spacing of the stator plates 12, 14.

Referring again to Figures 1 and 2, the coil bobbin 34 has an elongated central aperture 36 formed therethrough with a ferromagnetic core received therein. With particular reference to Figure 2, the core is shown as comprising a folded portion 38 formed integrally out of upper stator plate 12 by cutout 40 and a folded portion 42 similarly formed integrally out of lower stator plate 14 by cutout 44. The folded portions 38, 42 register against the bobbin aperture 36 and against each other to thus simultaneously provide a solid path of ferromagnetic material through the coil and locate the coil between the stator plates.

Referring to Figures 1 and 2, a plurality of salient stator poles are formed integrally out of the upper and lower stator plates 12, 14 and comprise, respectively, circumferentially spaced tabs 46 formed from cutouts 48 formed in upper stator plate 12 and integral tabs 50 formed out of cutouts 52 in the lower stator plate 14. The salient poles 46, 50 are disposed in circumferentially spaced axially interdigitated arrangement about the rotor assembly 16. The stator salient poles 46, 50 are in generally circumferentially equally spaced arrangement. However, in the present practice of the invention any two adjacent poles 46 or two adjacent poles 50 are formed so as to have an angular location effectively angularly offset from the remaining poles in the same stator plate. This asymetric arrangement of the poles as known in the art provides a net torque for enabling the motor to start.

Referring particularly to Figure 2, the rotor assembly 16 comprises a hub member 54 formed of nonmagnetic and preferably plastic material having a larger diameter flange 56 with an annular permanent magnet member 58 received concentrically thereanout and registered in a groove 60 for retention and rotation therewith. The rotor member 54 has a toothed pinion 62 formed integrally thereon at one axial end thereof and the pinion 62 is received through a clearance aperture 64 provided in the lower stator plate 14. An axle pin 66 is received centrally through the hub member 54 in the embodiment of Figures 1 and 2 with the upper end of the axle pin 66 journaled directly in upper stator plate 12 and the lower end of axle pin 66 journaled in the base 20 to prevent a ferromagnetic flux path between the stator plates. The axial end face of pinion 62 registers against a bearing surface 68 formed on the base 20 and the opposite axial end of the hub member 54 registers for rotation against the undersurface of upper stator plate 12.

The annular permanent magnet 58 is preferably formed of a suitable powdered ferrite material molded in a solid ring configuration and has a plurality of circumferentially spaced magnetic poles formed discretely about the outer periphery thereof. The number of poles on permanent magnet 58 must, of course, equal the number of stator poles to provide synchronous speed rotation of the motor.

Referring now to Figure 3, an alternate embodiment of the motor of the present invention is indicated generally at 70 and has a coil assembly indicated generally at 72 comprising a plurality of windings of electrical conductor 74 about a plastic bobbin 76. The bobbin has an elongated central aperture 78 therethrough for receiving a ferromagnetic core therein as will be hereinafter described.

A rotor assembly 80 is disposed in side-by-side parallel axis spaced relationship to the coil assembly 72. The coil assembly 72 and rotor assembly 80 are received between upper and lower stator plates 82, 84 respectively, which are formed of high magnetic permeability material such as iron or other ferromagnetic composition.

The upper stator plate has formed integrally therewith a folded tab 86 extending downwardly therefrom at generally right angles thereto; and, the lower stator plate 84 has formed integrally therewith an upwardly extending folded tab 88 with the tabs 86, 88 received in the bobbin aperture 78 in mutual registration. The tabs 86, 88 thus serve to locate and retain the coil assembly 72 between the upper and lower stator plates and also form a ferromagnetic core for continuous magnetic flux flow through the coil.

-10-

The rotor assembly 80 comprises a permanent magnet 90 of suitable ferrite composition having an annular configuration and received concentrically over a nonmagnetic rotor hub 92 preferably formed of suitable plastic material. The rotor hub has a pinion gear 94 formed integrally therewith at one axial end thereof with a cylindrical journaling surface 96 formed at the base of the pinion. The axial end of rotor 92 opposite pinion 94 has a second cylindrical journaling surface 98 formed integrally therewith. The upper rotor journaling surface 96 is received for rotation in direct contact with a journaling aperture 100 formed in the upper stator plate. The opposite rotor journaling surface 98 is received for rotation in direct contact with a journaling aperture 102 formed in the lower stator plate 84. The annular permanent magnet 90 has a plurality of discrete magnetic poles formed thereon in circumferentially spaced arrangement about the outer periphery thereof.

The upper stator plate has formed integrally thereon a plurality of salient poles 104 disposed about the rotor in circumferentially equally spaced arrangement, which poles are interdigitated with correspondingly disposed salient poles 106 formed integrally with the lower stator plate 84. As shown in Figure 3, an adjacent pair of the upper stator salient poles 104 have a different circumferential width than the remaining poles 104 to provide a net difference in pole attraction circumferentially about the rotor to provide a starting torque.

It will be observed that the embodiment of Figure 3 eliminates the axle pin for the rotor and the plastic hub member 92 is journaled directly against the iron of the stator plates.

-11-

A base 108 formed of nonmagnetic material, as for example, a suitable plastic, is provided and has a generally U-shaped configuration with a pair of spaced parallel grooves 110 formed in opposite legs of the U-shape for receiving in sliding engagement the edges of the upper stator plate 82. Similarly, a second pair of spaced parallel grooves 112 are formed in the opposite legs of the U-shape and have received therein in sliding registration the edges of the lower stator plate 84.

In the motor embodiment 70 of Figure 3 the sandwich construction of the stator plates 82, 84 and coil and rotor assemblies 72, 80 is first assembled and then installed as a unit by sliding the stator plates into the grooves 110, 112 in the base 108.

Referring now to Figures 5 and 6, another embodiment of the invention will be described in which the motor assembly indicated generally at 120 comprises a coil assembly indicated generally at 122 having a plastic bobbin 124 wound with a plurality of turns of electrical conductor 126. A rotor assembly indicated generally at 128 is provided and has a plastic hub 130 having a pinion gear 132 formed on one end thereof with an annular ferrite permanent magnet 134 received over the hub 130. The magnet 134 has formed about the periphery thereof a plurality of discrete magnetic poles in circumferentially spaced arrangement. The hub 130 has an annular journaling surface 136 formed adjacent the pinion and a journaling surface 138 formed on the end of the hub axially opposite the pinion.

With particular reference to Figure 5, the stator is shown in the flat as-fabricated form as an elongated

-12-

plate 140 having a pair of spaced parallel creases 142 formed transversely across the plate in a central region thereof with a raised tab 144 formed from a cut-out between the creases, the purpose of which will be described hereinafter in greater detail. Journaling apertures 146, 148 are formed in the plate 140 and spaced longitudinally equidistant from the creases 142. The apertures 146, 148 have journaling surfaces formed therein for receiving the corresponding journaling surfaces 136, 138 from the rotor hub. The plate 140 has a plurality of tabs 150, 152 formed from cut-outs in the plate and extending upwardly therefrom at generally right angles in circumferentially spaced arrangement about respectively the journal apertures 148, 146. The tabs 150, 152 are provided for forming corresponding salient stator poles for the poles of rotor magnet 134. The stator poles 150, 152 are preferably formed to be interdigitated upon assembly with the rotor.

The motor 120 is assembled by inserting the stator plate 140, in its flat form, through the central aperture 125 formed in the coil bobbin such that the bobbin is disposed between the creases 142 with tab 144 resiliently engaging the inner surface of the aperture 125. The plate 140 is then folded to a U-shaped configuration about creases 142 with the rotor hub bearing surfaces 136, 138 received respectively in the apertures 148, 146 in the plate in the configuration illustrated in Figure 6.

Referring to Figure 6, a base member 154 formed of nonmagnetic material is provided and has a generally U-shaped configuration with a plurality of spaced parallel grooves shown typically at 156 formed in opposite legs of the U-shaped base. The grooves 156 are configured so as to receive the edges of the plate 140 therein in closely fitting sliding engagement with the spacing between the grooves 156 on each leg providing the predetermined spacing for the opposite legs of the U-shaped stator plate 140. The motor 120 thus employs a novel U-shaped stator formed from a unitary plate having the salient stator poles formed integrally therewith. The motor 120 provides a simple construction wherein the coil assembly is assembled onto the stator plate and the plate folded to receive the rotor assembly therein and the subassembly thus formed received in sliding engagement with the mounting base.

Referring now to Figures 7 and 8, an alternate embodiment 140' of the stator plate is shown in which a plurality of pairs of creases 142' are formed transversely across the plate 140' in spaced parallel arrangement in the central region thereof. A tab 144' is formed from a cut-out disposed between the end pair of creases 142'. The plate 140' is then folded about the inner pair of creases 142' to provide a triple thickness 154 and the coil is then received over the triple thickness of material formed in the plate. The ends of the plate are then folded about the outer grooves 142' to form the U-shaped configuration of the stator plate. Finished form of the plate 140' is shown in Figure 8 with the coil assembly omitted for clarity. It will be understood, however, that the central aperture 125 of the coil bobbin is received over the triple thickness portion 154 with tab 144' engaging the inner surface of the bobbin aperture 125.

-14-

The resultant motor assembly thus comprises a unique synchronous alternating current permanent magnet motor having a minimum number of pieces and manufacturing assembly operations and yet provides a motor construction yielding sufficient torque for starting with a minimum usage of electrical conductor.

The present invention has been described hereinabove in the presently preferred practice; however, it will be apparent to those having ordinary skill in the art that the invention is capable of modification and variation with respect to the illustrated embodiments and the invention is limited only by the following claims.

WE CLAIM:

CLAIM 1. A synchronous alternating current motor (10) comprising:

   (a)   a first stator plate (12) formed of ferromagnetic material;

   (b)   a second stator plate (14) formed of ferromagnetic material disposed in spaced parallel relationship to said first stator plate;

   (c)   rotor means (16) including magnetomotive force means (58) defining a plurality of magnetic rotor poles disposed about a hub (54) formed of nonmagnetic material, said rotor means being disposed between said stator plates and journaled for rotation with respect thereto;

   (d)   coil means (18) defining a plurality of windings (32) of electrical conductor, said coil means being disposed between said stator plates with the axis of said windings in spaced generally parallel relationship to the axis of rotation of said rotor means wherein, said first and second stator plates each have integral portions thereof extending therefrom and disposed about the periphery of said rotor means forming a plurality of circumferentially spaced stator poles (46, 50) (104, 106) , and wherein at least one of said stator plates has an integral portion thereof extending therefrom forming a ferromagnetic core (38, 42, 154, 88, 150, 152) and continuous flux path through said windings; and,

   (e)   mounting structure including spacer means (22, 22', 156, 110) operative to locate and maintain said stator plates in said spaced parallel relationship.

CLAIM 2. A synchronous alternating current motor (10) comprising:

(a) stator means including a pair of spaced generally parallel plates (12, 14) formed of ferromagnetic material;

(b) rotor means (16) including magnetomotive force means (53) defining a plurality of circumferentially spaced magnetic poles disposed about a hub (54) formed of nonmagnetic material, said rotor means being disposed between said stator plates and journaled for rotation with respect thereto;

(c) coil structure (18) including means defining a plurality of turns (32) of electrical conductor, said coil structure being disposed between said stator plates in spaced side-by-side relationship with said rotor means, said conductor being adapted for connection to a source of alternating current poles;

(d) said stator plates having first integral portions thereof (38, 42, 154, 88) cooperating to define a continuous ferromagnetic flux path through the central region of said coil turns and second integral portions (50, 46, 104, 106, 150, 152) remote from said first portions cooperating to define a plurality of magnetic stator poles disposed in circumferentially spaced relationship about and closely adjacent said rotor means to define an air gap in the magnetic flux path of said motor; and,

(e) mounting structure including spacer means (22, 22', 156, 110) operative to locate and maintain said plates in said spaced parallel relationship.

CLAIM 3.  The motor defined in claim 2 wherein, said rotor hub has at least one end journaled in direct contact with said stator plate material.

CLAIM 4.  The motor defined in claim 2 wherein, said rotor hub has axle means (66) received centrally therein with one end of said axle means journaled in one of said stator plates and the opposite end of said axle means is journaled in said spacer means.

CLAIM 5.  The motor defined in claim 2 wherein, said rotor hub has axle means (66) received centrally therein with one end of said axle means journaled in direct contact with said stator plate material.

CLAIM 6.  The motor defined in claim 2, wherein said rotor hub has axle means (66) received therein with one end of said axle means journaled in direct contact with said mounting structure.

CLAIM 7.  The motor defined in claim 2 wherein said magnetomotive force means comprises an annular member of ferromagnetic material having a plurality of discrete magnetic poles formed about the outer periphery thereof.

CLAIM 8.  The motor defined in claim 2 wherein said stator poles comprise a plurality of tabs extending from adjacent surfaces of said stator plates, in interdigitated arrangement.

CLAIM 9.  The motor defined in claim 2 wherein:
(a)  said first integral portions of said stator plates comprise a tab (154) folded to double the thickness of said stator plate; and,

(b)    said coil structure includes a hollow bobbin
       (34) of nonmagnetic material with said folded
       tab received in said hollow for locating and
       retaining said coil structure between said
       stator plates.

CLAIM 10. The motor defined in claim 2 wherein said
coil structure includes a hollow bobbin (34) formed of
nonmagnetic and nonconducting material with said first
portion of said stator plates being received in said
hollow for locating and retaining said coil structure
between said stator plates.

CLAIM 11. The motor defined in claim 2 wherein said
rotor hub includes a pinion gear (62) formed integrally
thereon.

CLAIM 12. A synchronous alternating current motor
(10, 70) comprising:
(a)    a pair of spaced parallel stator plates (12,
       14, 82, 84) formed of ferromagnetic material;
(b)    coil structure (18, 72, 132) including a
       conductor having a plurality of turns, said
       coil structure being disposed between said
       plates with the axis of said turns generally at
       right angles to the surface of said plates;
(c)    each of said plates having a first core portion
       (38, 42, 86, 88) formed integral therewith
       extending at generally right angles to the
       surface of said plate, with at least one of
       said first portions extending into the central
       region of said coil turns and being operative
       to locate and retain said coil structure
       between said stator plates, said first portions
       of said stator plates cooperating to define a
       continuous ferromagnetic flux path through said
       coil turns;

(d)   rotor means (16, 80, 128) including magnetomotive force means (60, 134, 90) defining a plurality of magnetic poles disposed between said stator plates in side-by-side relationship with said coil structure and journaled for rotation about an axis generally parallel to the axis of said coil turns;

(e)   at least one of said stator plates having second portions remote from said first core portion, formed integrally therewith and extending about said motor means in circumferentially spaced arrangement and closely adjacent thereto for forming a plurality of stator poles (46, 50, 104, 106, 150, 152) each defining an air gap in the magnetic flux path of said motor; and,

(f)   mounting structure (20, 154, 108) including spacer means (22, 156, 110) operative to locate and maintain said stator plates in said spaced parallel relationship.

CLAIM 13. The motor defined in claim 12 wherein, said magnetomotive force means comprises an annular member formed of ferromagnetic material having a plurality of magnetic poles formed about the periphery thereof. .

CLAIM 14. The motor defined in claim 12 wherein, said rotor means includes a hub formed of nonmagnetic material with a pinion gear formed integrally on end end thereof.

CLAIM 15. The motor defined in claim 12 wherein, said stator poles are interdigitated.

CLAIM 16. The motor defined in claim 12 wherein:

(a) said rotor means includes a hub member (54) of nonmagnetic material; and,

(b) an axle pin (66) received centrally in said hub, said axle pin being journaled in direct contact with the material of one of said stator plates.


CLAIM 17. A synchronous alternating current fractional horsepower motor (120) comprising:

(a) stator means including plate means (144) formed of ferromagnetic material having portions (140) thereof disposed in spaced parallel relationship and means formed integrally therewith (142, 144) for providing a continuous ferromagnetic flux path between said spaced parallel portions at one end thereof;

(b) coil means (122) having a plurality of turns of electrical conductor (126), said coil means disposed between said spaced parallel portions with said integrally formed means providing a continuous flux path passing through the central region of said turns;

(c) rotor means (128) including a hub member of nonmagnetic material disposed between said spaced parallel portions and journaled for rotation with respect thereto, said rotor means being disposed in side-by-side generally parallel axis relationship with said coil means turns, said rotor means having magnetomotive force means (134) defining a plurality of magnetic rotor poles disposed in circumferentially spaced arrangement about the periphery of said rotor means;

    (d)   wherein said spaced parallel portions of said stator means each define a plurality of salient stator poles (150, 152) formed integrally therewith and disposed about said rotor means in circumferentially spaced relationship for defining an air gap in the magnetic flux loop of said motor; and,

    (e)   base means (154) including spacer means (156) having said stator means mounted thereon, said spacer means being operative to maintain said plate means in said spaced parallel relationship.

CLAIM 18. The motor assembly defined in claim 17, wherein said stator means comprises a one-piece plate member having a generally U-shaped configuration with the closed portion of said U-shape comprising said means forming a continuous magnetic flux path through said coil central region.

CLAIM 19. The motor assembly defined in claim 17, wherein said magnetomotive force means comprises an annular member formed of ferromagnetic material having a plurality of magnetic poles formed about the outer periphery thereof.

Fig.1

Fig.2

Fig.4

Fig.7

Fig.8

Fig.3

3/3

_Fig. 5_

_Fig. 6_

European Patent Office

**EUROPEAN SEARCH REPORT**

0064363
Application number

EP 82 30 2052

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | US-A-3 699 282 (JEPSON)<br><br>* column 5, lines 51-60; column 6, lines 25-51; column 15, lines 33-56; column 20, lines 7-11 *<br><br>--- | 1-8,10,12,13,15 | G 04 C 13/11<br>H 02 K 21/14<br>H 02 K 1/14 |
| Y | DE-A-2 551 828 (MUTTER)<br><br>* page 13, lines 19-27; page 18, line 21 to page 19, line 6; figures 1,3,4 *<br><br>--- | 1-8,11-17,19 | |
| A | FR-A-1 520 325 (CROYMANS)<br><br>* page 1, right-hand column, lines 1-20; page 2, right-hand column, lines 3-5; figures 1a-c,3 *<br><br>--- | 1-8,12-16,17,19 | |
| A | FR-A-2 452 194 (FLAIG)<br>* page 2, line 33 to page 3, line 5 *<br><br>--- | 9 | TECHNICAL FIELDS SEARCHED (Int. Cl. 3)<br><br>G 04 C 13/11<br>H 02 K 37/00<br>G 04 C 3/16<br>G 04 C 15/00<br>H 02 K 21/12<br>H 02 K 21/14 |
| A | DE-B-1 058 138 (GEN. MOTORS)<br><br>----- | | H 02 K 21/16<br>H 02 K 1/12<br>H 02 K 1/14 |

The present search report has been drawn up for all claims

| Place of search | Date of completion of the search | Examiner |
|---|---|---|
| THE HAGUE | 30-07-1982 | STEINMETZ L.J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82